# FASCICULE DE BREVET EUROPEEN

(11) **EP 1 055 702 B1**
(45) Date de publication et mention de la délivrance du brevet: **26.01.2005**
(21) Numéro de dépôt: 00111155.8
(22) Date de dépôt: 24.05.2000
(51) Int. Cl.: C08K 3/22, C08L 21/00, B60C 1/00

(54) **Composition de caoutchouc colorée pour enveloppe de pneumatique**
Gefärbte Kautschukzusammensetzung für Reifen
Coloured rubber composition for tyre

(30) Priorité: 28.05.1999 FR 9906856
(43) Date de publication de la demande: 29.11.2000
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: Daude, Hélène, 63000 Clermont-Ferrand (FR)
(74) Mandataire: Cohen, Sylvia

(56) Documents cités:
- EP-A- 0 022 365
- FR-A- 996 751
- GB-A- 741 169
- US-A- 2 427 942
- US-A- 2 655 195
- US-A- 4 255 296

## Description

La présente invention est relative à des compositions de caoutchouc destinées à être utilisées pour la fabrication d'enveloppes de pneumatiques.

Plus particulièrement, l'invention a pour objet des compositions de caoutchouc colorées destinées à constituer au moins une partie de la surface extérieure d'enveloppes de pneumatiques. Le terme " coloré" est entendu ici comme excluant la couleur noire, c'est-à-dire toutes les couleurs y compris le blanc.

Ces compositions sont ainsi destinées à recouvrir au moins partiellement la surface d'enveloppes de pneumatiques quelle que soit la nature et la composition des mélanges caoutchouteux sur lesquels elles vont être déposées. Bien entendu, dans la mesure où il ne s'agit que d'une couverture de surface, ces compositions sont plus particulièrement destinées à recouvrir des surfaces d'enveloppes de pneumatiques dites "non-usantes" c'est-à-dire qui ne sont pas au contact de la route dans des conditions normales d'utilisation des pneumatiques. Ainsi, de telles compositions colorées conformes à l'invention, ayant des fins notamment décoratives et de marquage, pourront constituer au moins partiellement la surface extérieure d'un flanc d'enveloppe de pneumatique ou des fonds de sculptures de la bande de roulement.

Or, comme on le sait, les vulcanisats de caoutchoucs diéniques essentiellement insaturés, naturels ou synthétiques, en raison de la présence de doubles liaisons sur leur chaîne moléculaire, sont susceptibles, s'ils ne sont pas protégés, de se détériorer plus ou moins rapidement après une exposition prolongée à l'atmosphère en raison de mécanismes connus d'oxydation entraînant une rigidification et une fragilisation des vulcanisats suite à des ruptures des doubles liaisons et à l'oxydation des ponts de soufre. De tels mécanismes complexes ont été décrits notamment dans les documents suivants "Antidegradants for tire applications" dans "Tire compounding", Education Symposium N°37 (ACS), Cleveland, Communication I, Octobre 1995; "Non-blooming high performance antidegradants", Kautschukn Gummi Kunststoffe, 47. Jahrgang, N°4, 1994, 248-255; "Antioxydants" dans Encycl. Polym. Sci. And Eng., 2nd Edition, Vol. 2, 73-91.

Ces phénomènes d'oxydation ont pu être peu à peu inhibés grâce à la mise au point et à la commercialisation de divers agents antioxydants dont les plus efficaces sont connus pour être des dérivés de la quinoléine (TMQ), ou des dérivés de la p-phénylènediamine (PPD ou PPDA) encore plus actifs que les premiers tels que la N-1,3-diméthylbutyl-N'-phényl-p-phénylènediamine (6-PPD). Ces antidégradants type TMQ et PPD, parfois même associés, sont aujourd'hui très répandus et utilisés de manière quasi-systématique, comme cela est précisé dans les publications citées précédemment, dans les compositions de caoutchouc conventionnelles chargées au moins en partie de noir de carbone leur donnant cette couleur noire caractéristique.

Or les agents antioxydants cités ci-dessus, et en particulier les dérivés TMQ ou PPD, ne sont pas stables à la lumière et, sous l'effet du rayonnement U.V., génèrent des espèces chimiques colorées qui provoquent une altération de couleur des compositions de caoutchouc les tachant en brun sombre. Il est clair que cette caractéristique exclut l'utilisation de tels agents au sein de compositions blanches, claires ou colorées, mais elle pose également des problèmes d'utilisation de compositions blanches, claires ou colorées au contact de compositions contenant ces agents antioxydants qui vont en effet, si rien n'est prévu pour les en empêcher, naturellement migrer dans et à la surface des compositions blanches, claires ou colorées et les tâcher.

C'est pourquoi, il est fort complexe de mettre au point des compositions colorées destinées à recouvrir une partie de la surface extérieure d'enveloppes de pneumatiques et de résister au tachage dû aux agents antioxydants présents dans les autres compositions utilisées dans les enveloppes de pneumatiques.

La plupart des solutions envisagées repose sur l'utilisation de constituants susceptibles d'être introduits dans des compositions caoutchouteuses et possédant des propriétés d'imperméabilité. Dans le domaine du pneumatique, il est connu de faire appel aux propriétés d'imperméabilité du caoutchouc butyle. Cependant l'utilisation du caoutchouc butyle pose de nombreux problèmes.

En effet, dans certaines solutions permettant la réalisation de flancs blancs ou colorés, on a envisagé de modifier l'architecture des enveloppes de pneumatiques en prévoyant des compositions " écrans " fortement chargées en caoutchouc butyle afin d'empêcher la migration des agents antioxydants tachants et destinées à séparer les compositions blanches des autres compositions constitutives desdites enveloppes. On comprend aisément que de telles réalisations sont susceptibles de remettre en cause les propriétés et les performances des enveloppes de pneumatiques concernées dans la mesure où l'on réalise des modifications notables dans leur architecture. De plus, il est connu que de fortes proportions de caoutchouc butyle dans des compositions créent des problèmes d'adhésion de ces dernières aux autres compositions présentes dans le pneumatique.

D'autres solutions ont consisté à introduire directement du caoutchouc butyle au sein des compositions colorées. Ainsi la publication CA-2 228 692 décrit une composition de flancs blancs utilisant, afin de constituer une barrière pour les agents antioxydants tachants, une base élastomérique majoritairement constituée de caoutchoucs butyle. Ces solutions permettent d'éviter certaines modifications de l'architecture de l'enveloppe de pneumatique mais ne règlent pas les problèmes liés à l'adhésion. C'est pourquoi, l'interface obtenue entre les flancs blancs et les autres mélanges présents dans le pneumatique étant fragile, de telles compositions pour flancs blancs ne peuvent être déposées que sur des parties très limitées du flanc qui ne sont pas sollicitées afin d'éviter des décollements d'interfaces.

Enfin d'autres solutions consistent à réaliser des compositions destinées à être utilisées en masse et non plus seulement en surface, et à renoncer à la présence des agents antioxydants à base des dérivés PPD ou TMQ au sein de ces compositions mais ceux-ci étant très efficaces, leur remplacement nécessite la mise en place de systèmes de protection complexes comme des exemples sont décrits dans la publication WO 99/02590. Notons, de plus, qu'il n'est généralement pas envisageable de remplacer dans toutes les compositions présentes dans le pneumatique les agents antioxydants à base des dérivés PPD ou TMQ qui restent très performants, ce qui du fait de leur migration nécessite de prévoir également une solution telle que celle utilisant du caoutchouc butyle dont on a déjà évoqué les inconvénients.

L'invention a pour objet des compositions colorées susceptibles de constituer une partie de la surface extérieure d'enveloppes de pneumatiques palliant les inconvénients cités précédemment.

La demanderesse a découvert d'une façon surprenante que des compositions caoutchouteuses colorées vulcanisables au soufre fortement chargée en oxyde de fer non stoechiométrique, soit à un taux de plus de 50 pce, permettaient de réaliser des compositions colorées de surface pour enveloppes de pneumatiques susceptibles d'être déposées sur les compositions contenant des agents antioxydants tachants en préservant leur couleur de surface, et ceci sans nécessiter l'emploi d'agents barrières typiques aux antioxydants.

En effet, les propriétés des oxydes de fer non stoechiométriques qui, de par leur activité photocatalytique, entraînent la dégradation de molécules organiques ou biorganiques sont connues. Cependant l'existence de telles propriétés empêche a priori l'homme de l'art d'utiliser de fortes quantités de ces oxydes pour plusieurs . raisons. D'une part parce que ces propriétés de dégradation des doubles liaisons sont contraires aux souhaits et aux caractéristiques protectrices prévues dans le pneumatique pour précisément éviter cette dégradation par oxydation, d'autre part il semble étonnant que la présence d'oxydes de fer non stoechiométriques seule permette de rendre la surface des compositions autonettoyantes avec un si faible taux.

L'invention a donc pour objet une composition de caoutchouc colorée vulcanisable au soufre comprenant au moins une base élastomérique dont au moins 30 parties pour 100 parties en poids d'élastomère, pce, est constituée par un élastomère diénique essentiellement insaturé, et ayant une teneur d'au moins 50 pce d'oxyde de fer non stoechiométrique. L'oxyde de fer non stoechiométrique peut être choisi notamment parmi le monoxyde de fer ou l'oxyde de fer III, Fe₂O₃, non stoechiométriques.

L'invention concerne également des pneumatiques comprenant de telles compositions colorées, ainsi que des flancs de pneumatique et des bandes de roulement dont une partie au moins de la surface extérieure comprend de telles compositions colorées.

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles).

C'est ainsi, par exemple, que des élastomères diéniques tels que les caoutchoucs butyle ou les copolymères de diènes et d'alpha-oléfines type EPDM (terpolymère éthylène-propylène-diène) n'entrent pas dans la définition précédente et peuvent être notamment qualifiés d'élastomères diéniques "essentiellement saturés" (taux de motifs d'origine diénique faible ou très faible, toujours inférieur à 15%).

Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend en particulier par élastomère diénique essentiellement insaturé susceptible d'être mis en oeuvre dans les compositions conformes à l'invention:
- tout homopolymère obtenu par polymérisation d'un monomère diène conjugué ayant de 4 à 12 atomes de carbone;
- tout copolymère obtenu par copolymérisation d'un ou plusieurs diènes conjugués entre eux ou avec un ou plusieurs composés vinyle aromatique ayant de 8 à 20 atomes de carbone;

A titre de diènes conjugués conviennent notamment le butadiène-1,3, le 2-méthyl-1,3-butadiène, les 2,3-di(alkyle en C1 à C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinyle-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse (Tg) de -40°C à -80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

De manière particulièrement préférentielle, l'élastomère diénique de la composition conforme à l'invention est choisi dans le groupe des élastomères diéniques fortement insaturés constitué par les polybutadiènes (BR), les polyisoprènes (IR) ou du caoutchouc naturel (NR), les copolymères de butadiène-styrène (SBR), les copolymères de butadiène-isoprène (BIR), les copolymères d'isoprène-styrène (SIR), les copolymères de butadiène-acrylonitrile (NBR), les copolymères d'isoprène-styrène (SIR), les copolymères de butadiène-styrène-isoprène (SBIR) ou un mélange de deux ou plus de ces composés.

Néanmoins de tels polymères diéniques peuvent être utilisés seuls ou en coupage avec d'autres élastomères conventionnellement utilisés dans les pneumatiques tels que des élastomères diéniques constitués par :
- un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
- un copolymère d'isobutène et d'isoprène (caoutchouc butyle ou IIR), ainsi que les versions halogénées, en particulier chlorées ou bromées (BIIR), de ce type de copolymère,
- ou un copolymère d'isobutène et de paraméthylstyrène, ainsi que les versions halogénées, en particulier chlorées ou bromées (BIMS), de ce type de copolymère.

Il est clair que les propriétés photocatalytiques des oxydes de fer non stoechiométriques ne peuvent efficacement être mises en oeuvre qu'avec une présence suffisante d'élastomères possédant des liaisons insaturées susceptibles d'être dégradées qu'on peut considérer comme étant de l'ordre de 30% de la base élastomérique. De plus, il est nécessaire afin de pouvoir déposer les compositions colorées conformes à l'invention sur n'importe quelle surface non usante du pneumatique comme on l'a précisé au début de la description, que la base élastomérique de ces dernières soient constituées à titre majoritaire de tels élastomères diéniques essentiellement insaturés.

A titre d'oxyde de fer non stoechiométrique, conviennent notamment le monoxyde de fer et l'oxyde de fer III non stoechiomiétriques.

Le monoxyde de fer étant de couleur jaune et le Fe₂O₃ étant de couleur rouge, on peut les utiliser seuls, ensemble ou en présence de pigments colorés ou d'azurants optiques afin d'obtenir du jaune ou d'autres couleurs sachant que, dans un tel cas, les règles élémentaires de mélange de couleur vont s'appliquer.

On peut ainsi utiliser tout type d'agent colorant connu de l'homme du métier, cet agent colorant pouvant être organique ou inorganique, soluble ou non dans le compositions conformes à l'invention. A titre d'exemple, on peut citer des colorants minéraux tels que par exemple des métaux en poudre, notamment du cuivre ou de l'aluminium en poudre, ou divers oxydes métalliques, notamment des silicates, des aluminates, des titanates, des oxydes ou hydroxydes de fer, des oxydes mixtes d'éléments métalliques différents tels que Co, Ni, Al, Zn. On peut citer également des pigments organiques tels que des indanthrones, des diketo-pyrrolo-pyrroles ou des condensés diazo, des pigments organométalliques tels que des phtalocyanines.

On peut également prévoir la présence de charge renforçante telle que du noir de carbone ou de la silice pour conférer d'autres types de propriétés aux compositions conformes à l'invention, en tenant compte, bien entendu, de la couleur de cette charge qui peut modifier ou nuire à la coloration souhaitée de la composition.

En tenant compte des aspects cités ci-dessus de coloration, les compositions conformes à l'invention contiennent outre les composés décrits précédemment tout ou partie des constituants habituellement utilisés dans les compositions de caoutchouc diénique de pneumatiques, comme par exemple des plastifiants, un système de réticulation à base soit de soufre, soit de donneurs de soufre et/ou de peroxyde, des accélérateurs de vulcanisation, des huiles d'extension, du type aromatique, naphténiques ou paraffiniques, ou encore divers agents anti-fatigue.

Les compositions de caoutchouc sont préparées en mettant en oeuvre les élastomères diéniques selon des techniques tout à fait connues, par travail thermomécanique en une ou plusieurs étapes dans un mélangeur interne à palettes, suivi d'un mélangeage sur un mélangeur externe.

Selon la technique classique, on utilise un mélangeur interne usuel afin de mixer les élastomères, la charge et les autres constituants de la composition à l'exception du système de vulcanisation. Le mélange obtenu est ensuite repris sur un mélangeur externe, généralement un mélangeur à cylindres, et on y ajoute alors le système de vulcanisation. Une ou plusieurs étapes peuvent être ajoutées dans le mélangeur interne, essentiellement dans le but de faire subir au mélange un traitement thermomécanique complémentaire.

L'invention est illustrée à titre non limitatif par les exemples qui suivent mais qui ne sauraient constituer une limitation de la portée de l'invention.

### Exemples

Dans ces exemples, les propriétés des compositions sont évaluées comme indiqué ci-après.

Les valeurs colorimétriques sont déterminées à l'aide d'un spectrocolorimètre Microflash 200 D DATA COLOR en configuration D65/10 (lumière du jour ; angle d'observation 10°). Les propriétés colorimétriques sont mesurées de manière connue, selon le manuel d'instruction du colorimètre (mai 1995), par analyse du spectre de réflectance des éprouvettes.

Ces mesures sont reportées dans le système " CIE LAB" des 3 coordonnées tridimensionnelles colorimétriques L*, a*, b*, système dans lequel :
- l'axe a* représente la coordonnée de chromaticité vert-rouge, avec une échelle allant de 100 (vert) à + 100 (rouge) ;
- l'axe b* représente la coordonnée de chromaticité bleu-jaune, avec une échelle allant de -100 (bleu) à + 100 (jaune) ;
- l'axe L* représente la coordonnée de luminosité, avec une échelle allant du 0 (noir) à 100 (blanc) ;
- ΔE = [(ΔL*)2 + (Δa*)2 + (Δb*)2 ]1/2 représente l'écart colorimétrique global moyen de chaque échantillon par rapport à un témoin non vieilli; plus ΔE est élevé plus la couleur de la composition a évolué.

Lors des tests de colorimétrie, les éprouvettes utilisées sont des éprouvettes non normalisées consistant en des lanières de caoutchouc de dimensions (1 x 1 x e) égales à (150 x 150 x 3), en millimètres avec une face A constituée par une composition de référence sur une épaisseur de 2 mm et l'autre face B comprenant sur toute son épaisseur deux lanières de caoutchouc de composition sur une largeur de 65 mm respectivement qui entoure une lanière de caoutchouc d'une composition à tester.

Ces éprouvettes sont laissées statiques dehors pendant une période donnée, la face B comprenant la composition à tester étant située à l'air libre. A l'issue de cette période, la surface de la face B est frottée avec un chiffon ordinaire imbibé d'éthanol de manière à permettre l'élimination des éventuelles poussières de farinage qui ne s'éliminent pas seules en statique, puis on procède à la mesure de l'écart colorimétrique ΔE. On considérera qu'un écart colorimétrique ΔE inférieur ou égal à 25 est acceptable, avec une approximation de ± 2. En effet, un tel écart colorimétrique est représentatif d'une évolution de couleur restant dans la gamme de la couleur initiale.

Pour l'ensemble des exemples qui suivent la composition à tester comprend une base élastomérique constitué par un mélange 60/40 d'un caoutchouc naturel et d'un polybutadiène, qui sont tous deux des élastomères diéniques fortement insaturés.

A titre de composition de référence, qu'on nommera la composition A dans ce qui suit, on a choisi ici une composition support proche de celles utilisées dans les flancs de pneumatiques chargés au noir de carbone. Il est clair que ces exemples ne limitent en rien les résultats obtenus à la superposition de compositions conformes à l'invention sur ce type de compositions conventionnelles, sachant que la démonstration tient essentiellement à la présence des agents antioxydants dans ces compositions.

Ainsi la formulation de la composition A est la suivante, où toutes les parties sont exprimées en poids et dans laquelle l'élastomère est constitué par un coupage de caoutchouc naturel et de polybutadiène 35/65, :

| | |
|---|---|
| Elastomère | 100 |
| Noir de carbone (N660) | 60 |
| Huile aromatique | 20 |
| Cire (a) | 1 |
| Oxyde de zinc | 3 |
| Acide stéarique | 1 |
| TMQ | 1 |
| 6-PPD | 3 |
| Sulfénamide (b) | 0,95 |
| Soufre | 1,6 |

| | |
|---|---|
| (a) : cire antiozone (Redezon 500 de la société Repsol) | |
| (b) : sulfénamide : N-cyclohexyl-2-benzothiazyl sulfénamide. | |

La formulation de chacune des compositions B à tester utilisées pour les éprouvettes varie uniquement sur la nature et la quantité de charge et/ou de pigment utilisés, soit une formulation suivante où toutes les parties sont exprimées en poids et dans laquelle l'élastomère est constitué par un coupage de caoutchouc naturel et de polybutadiène 60/40 :

| | |
|---|---|
| Elastomère | 100 |
| Huile paraffinique | 15 |
| Acide stéarique | 2 |
| Oxyde de Zinc | 3 |
| Soufre | 2 |
| Sufénamide (a) | 2 |
| Charge et/ou pigment | variable * |

| | |
|---|---|
| (a) : sulfénamide : N-cyclohexyl-2-benzothiazyl sulfénamide, | |
| * Les charges et pigments utilisés sont les suivants : - jaune 3G : pigment jaune Cromophtal (société Ciba-Geigy), - silice : ultrasil VN2 (société Degussa), - oxyde de titane "anatase "(société Thann et Mulhouse), - monoxyde de fer, pigment jaune (société Bayer), - Fe₂O₃, pigment rouge (société Bayer). | |

Afin de réaliser ces compositions B, on procède pour tous les exemples qui suivent de la manière suivante : on introduit l'élastomère diénique ou le mélange d'élastomères dans une mélangeur interne, rempli à 75% et dont la température est d'environ 30°C, puis après un temps approprié de malaxage, par exemple de l'ordre d'une minute, on ajoute tous les autres ingrédients à l'exception du système de vulcanisation et 2/3 de la charge minérale, puis après un nouveau temps de malaxage on introduit les 1/3 restant de la charge minérale et on on poursuit le travail thermomécanique de malaxage jusqu'à une température de tombée déterminée (165°C). On récupère le mélange ainsi obtenu puis on ajoute le système de vulcanisation sur un mélangeur externe (homo-finisseur) à 30°C. La vulcanisation est effectuée à 165°C pendant 10 mn.

Pour la composition A, il n'est pas nécessaire étant donné le faible taux de charge, d'introduire cette dernière en deux fois.

### Exemple 1

Cet exemple a pour but de comparer la résistance au tachage de compositions incluant des charges distinctes. Les éprouvettes réalisées contiennent, comme on l'a dit précédemment, le mélange de composition A de référence et des compositions B à tester ayant dans leur formulation en plus des constituants cités précédemment respectivement :
- pour les compositions B1₍₁₀₀₎, B1₍₁₅₀₎, B1₍₂₀₀₎ : 20 pce d'un pigment coloré jaune 3G et respectivement 50/50, 75/75 et 100/100 pce d'un coupage craie/kaolin,
- pour les compositions B2₍₅₀₎, B2₍₁₀₀₎ : 5 pce d'un pigment coloré jaune 3G et respectivement 50 et 100 pce de silice,
- pour les compositions B3₍₂₀₎, B3₍₅₀₎, B3₍₁₀₀₎, B3₍₁₅₀₎, B3₍₂₀₀₎ : respectivement 20, 50, 100, 150 et 200 pce de monoxyde de fer,
- et pour les compositions B4₍₅₀₎ : 20 pce d'un pigment coloré jaune 3G et 50 pce de dioxyde de titane.

On notera qu'à des fins de comparaison plus aisée entre les différentes éprouvettes réalisées, on a choisi d'utiliser pour les compositions contenant une charge blanche (craie, kaolin, silice, dioxyde de titane) un pigment jaune permettant d'avoir avant photo-oxydation les mêmes colorations, la quantité de jaune 3G étant plus faible dans le cas de la silice qui n'est pas une charge opacifiante contrairement aux autres charges présentes dans cet exemple.

Les compositions B3 sont des compositions conformes à l'invention.

Les résultats obtenus sont reportés dans le tableau I qui suit.

**Tableau I**

| **Composition** | **B1**_{**(100)**} | **B1**_{**(150)**} | **B1**_{**(200)**} | **B2**_{**(50)**} | **B2**_{**(100)**} | **B3**_{**(20)**} | **B3**_{**(50)**} | **B3**_{**(100)**} | **B3**_{**(150)**} | **B3**_{**(200)**} | **B4**_{**(50)**} |
|---|---|---|---|---|---|---|---|---|---|---|---|
| ΔE* | 48 | 43 | 44 | 44 | 30 | 25 | 9 | 7 | 2 | 1 | 33 |

| | | | | | | | | | | | |
|---|---|---|---|---|---|---|---|---|---|---|---|
| * Les ΔE ont été calculés après 90 jours d'exposition des éprouvettes à l'air libre. | | | | | | | | | | | |

On constate que les compositions B1 et B2 contenant des charges minérales silice ou craie/kaolin même dans de fortes quantités présentent des altérations de couleur inacceptables. C'est également le cas pour la composition B4 qui contient 50 pce de dioxyde de titane, bien que le dioxyde de titane soit connu pour ses propriétés phtotocatalytiques.

Les compositions B3₍₅₀₎, B3₍₁₀₀₎, B3₍₁₅₀₎, B3₍₂₀₀₎ conformes à l'invention donnent de très bons résultats et montrent que la surface a gardé une coloration jaune comprise dans la gamme du jaune initiale. Les résultats des compositions contenant du monoxyde de fer sont dejà très bons avec un taux correspondant à 50 pce, ils s'améliorent avec 100pce mais on peut noter qu'à partir de 150 pce, ils deviennent excellents. A l'inverse on observe qu'un taux de 20 pce en monoxyde de fer est tout à fait insuffisant, la composition B3₍₂₀₎ présentant des altérations de couleur inacceptables.

### Exemple 2

Cet exemple a pour but de montrer la résistance au tachage d'un oxyde de fer autre que le monoxyde de fer, le Fe₂O₃ de couleur rouge. Les éprouvettes réalisées contiennent, comme dans l'exemple précédent, le mélange de composition A de référence et des compositions B à tester, B5₍₅₀₎, B5₍₁₀₀₎, B5₍₁₅₀₎, ayant dans leur formulation respectivement 50, 100 et 150 pce de Fe₂O₃.

Les résultats sont reportés dans le tableau II suivant.

**Tableau II**

| **Composition** | **B5**_{**(50)**} | **B5**_{**(100)**} | **B5**_{**(150)**} |
|---|---|---|---|
| ΔE* | 6 | 2,4 | 0,8 |

On constate qu'avec les compositions B5 conformes à l'invention, les surfaces ont gardé une coloration rouge comprise dans la gamme du rouge. Les résultats des compositions contenant du Fe₂O₃ sont très bons avec un taux correspondant à 50 pce, mais on note comme avec le monoxyde de fer qu'à partir de 100 pce ils deviennent excellents et s'améliorent encore à 150 pce.

Ainsi, de manière inattendue pour l'homme du métier, on utilise dans les compositions conformes à l'invention les propriétés photocatalytiques d'oxydes de fer non stoechiométriques pour dégrader l'élastomère lui-même, en introduisant lesdits oxydes de fer dans la matrice de la composition caoutchouteuse, afin d'obtenir une érosion de surface permettant une élimination du tachage lié aux agents antioxydants. Dans une utilisation dynamique des pneumatiques, cet " autonettoyage " qui correspond à un renouvellement de surface entraîne également le départ des salissures venant de l'extérieur du pneumatique telles que les poussières de freins.

## Revendications

1. Pneumatique dont au moins la surface extérieure d'un flanc est constituée, au moins en partie, d'une composition de caoutchouc de couleur autre que la couleur noire, comprenant au moins une base élastomérique dont au moins 30 pce (parties en poids pour 100 parties d'élastomère) sont constituées par un élastomère diénique essentiellement insaturé, **caractérisé en ce qu'**elle comporte au moins 50 pce d'oxyde de fer non stoechiométrique.

2. Pneumatique selon la revendication 1, ayant une teneur d'au moins 50 pce de monoxyde de fer non stoechiométrique.

3. Pneumatique selon la revendication 1, ayant une teneur d'au moins 50 pce d'oxyde de fer III non stoechiométrique.

4. Pneumatique selon l'une quelconque des revendications 1 à 3, dans laquelle la base élastomérique est constituée majoritairement par un élastomère diénique essentiellement insaturé.

5. Pneumatique selon l'une quelconque des revendications 1 à 4, dans laquelle la teneur en oxyde de fer non stoechiométrique est d'au moins 100 pce.

6. Pneumatique selon la revendication 5, dans laquelle la teneur en oxyde de fer non stoechiométrique est d'au moins 150 pce.

7. Pneumatique selon l'une quelconque des revendications 1 à 6, dans laquelle l'élastomère diénique essentiellement insaturé est constitué par un coupage de caoutchouc naturel et de polybutadiène.

## Claims

1. A tyre, at least the outer surface of a sidewall of which consists, at least in part, of a rubber composition of a colour other than black, comprising at least one elastomeric base, at least 30 phr (parts by weight per 100 parts of elastomer) of which is formed by an essentially unsaturated diene elastomer, **characterised in that** it comprises at least 50 phr of non-stoichiometric iron oxide.

2. A tyre according to Claim 1, having a content of at least 50 phr of non-stoichiometric iron monoxide.

3. A tyre according to Claim 1, having a content of at least 50 phr of non-stoichiometric iron (III) oxide.

4. A tyre according to any one of Claims 1 to 3, in which the elastomeric base is formed majoritarily of an essentially unsaturated diene elastomer.

5. A tyre according to any one of Claims 1 to 4, in which the non-stoichiometric iron oxide content is at least 100 phr.

6. A tyre according to Claim 5, in which the non-stoichiometric iron oxide content is at least 150 phr.

7. A tyre according to any one of Claims 1 to 6, in which the essentially unsaturated diene elastomer is formed by a blend of natural rubber and polybutadiene.

## Patentansprüche

1. Luftreifen, bei dem zumindest die äußere Oberfläche einer Seitenflanke zumindest teilweise aus einer Kautschukmischung besteht, die eine von Schwarz verschiedene Farbe aufweist und die mindestens eine elastomere Grundmasse enthält, bei der mindestens 30 pce (Gewichtsteile auf 100 Teile Elastomer) aus einem im Wesentlichen ungesättigten Dienelastomer bestehen, **dadurch gekennzeichnet, dass** sie mindestens 50 pce nicht stöchiometrisches Eisenoxid enthält.

2. Luftreifen nach Anspruch 1, der einen Gehalt von mindestens 50 pce nicht stöchiometrischem Eisenmonoxid aufweist.

3. Luftreifen nach Anspruch 1, der einen Gehalt von mindestens 50 pce nicht stöchiometrischem Eisen(III)-oxid aufweist.

4. Luftreifen nach einem der Ansprüche 1 bis 3, wobei die elastomere Grundmasse hauptsächlich aus einem im Wesentlichen ungesättigten Dienelastomer besteht.

5. Luftreifen nach einem der Ansprüche 1 bis 4, wobei der Gehalt an nicht stöchiometrischem Eisenoxid mindestens 100 pce beträgt.

6. Luftreifen nach Anspruch 5, wobei der Gehalt an nicht stöchiometrischem Eisenoxid mindestens 150 pce beträgt.

7. Luftreifen nach einem der Ansprüche 1 bis 6, wobei das im Wesentlichen ungesättigte Dienelastomer aus einem Verschnitt von Naturkautschuk und Polybutadien besteht.
